# EUROPEAN PATENT SPECIFICATION

(11) **EP 1 239 366 B1**
(45) Date of publication and mention of the grant of the patent: **08.03.2006**
(21) Application number: 01130835.0
(22) Date of filing: 27.12.2001
(51) Int. Cl.: G06F 9/445

(54) **Method for expanding in friendly manner the functionality of a portable electronic device and corresponding portable electronic device**
Verfahren zur einfachen Ausdehnung der Funktionalität eines tragbaren elektronischen Gerätes und dazugehörendes tragbares elektronisches Gerät
Procédé pour l'extension des fonctionnalités d'un dispositif électronique portable et dispositif électronique portable correspondant

(30) Priority: 29.12.2000 EP 00830873
(43) Date of publication of application: 11.09.2002
(73) Proprietor: STMicroelectronics S.r.l., 20041 Agrate Brianza (Milano) (IT)
(72) Inventor: Navoni, Loris Giuseppe, 20063 Cernusco Sul Naviglio (Milano) (IT); Borgatti, Michele, 41035 Finale Emilia (Modena) (IT); Cali, Lorenzo, 20052 Monza (Milano) (IT); Rolandi, Pierluigi, 15059 Monleale (Alessandria) (IT)
(74) Representative: Ferreccio, Rinaldo

(56) References cited:
- EP-A- 0 945 792
- US-A- 4 908 792
- US-A- 5 815 706
- SILVERIO V J ET AL: "THE MERLIN COMMUNICATIONS SYSTEM" IEEE JOURNAL ON SELECTED AREAS IN COMMUNICATIONS, IEEE INC. NEW YORK, US, vol. SAC-3, no. 4, July 1985 (1985-07), pages 584-593, XP000837570 ISSN: 0733-8716

## Description

### Field of Application

The present invention relates to a method of expanding the functional capabilities of portable electronic devices with user friendly modes, of the type in which a host device is associated a quick-connect functional expansion module.

The invention further relates to a portable electronic device having expanded functions in a user friendly mode.

As is well known, developments in electronic computing devices have led to consolidate in a small space a number of functions that were afforded in the past only by desk computers. Many functions, e.g. diary, calculation, communication, scheduling functions, are now offered by a number of appliances (e.g., palmar and hand-held computers, mobile phones, organizers) designed for operation while held in one's hand.

With palm-top devices, data and/or commands to execute operations sought by a user are entered by depressing keys or through a touch screen.

A most critical consideration in the design of palm-top devices is the interfacing with the user. For the available functions to be readily set to work by the user, it is necessary that the user be enabled to grasp the essentials for their activation without having to go through lengthy training sessions. This because, unlike standard computers, these devices are often to interact with a distracted user, as may be the case of a cellular phone being operated in a crowded railway station, or are required to respond promptly, as when voice or written notes are to be entered. Having to allow some minutes for the system to re-initialize, as is often necessary with desk computers, would be unthinkable in such cases.

In this context, to be able to call an application or to enter a sequence of data by voice messages would certainly make such palm-top devices quicker and more convenient to use.

A prior approach to providing these features is disclosed in US Patent No. 5,602,963, where a so-called personal organizer is described that can be commanded by voice.

Another voice-commanded device is disclosed in US Patent No. 6,061,651, wherein a system is activated upon recognition of a vocal pulse above a given threshold.

Additionally to ease of activation and control, the industry of palm-top electronic devices pursues expansion of the functions of a generic support system that affords a number of discrete functions within a limited area. However, a user's requirement is that any added functions should be readily identifiable, quick to install, and operable at will with no overlap of the support system.

An approach to filling these demands is disclosed in US Patent No. 5,133,076, which provides an expansion module for a palm-top computer.

Another prior proposal is Patent No. 5,432,938, which provides a method of automatically activating a functional expansion module by insertion into a computer unit.

This invention is related to the above-outlined field, and primarily directed to provide a method of managing supplementary modules to a palm-top type of base device.

The underlying technical problem of this invention is to provide a method of implementing additional functions within a support system, specifically within a palm-top electronic device, with features appropriate to make predetermined applications, not originally provided in the support system, quick to set up and use, for improved system applicability and user's satisfaction.

### Summary of the Invention

The principle on which the present invention stands is one of dividing said technical problem between a series of sub-problems addressing the interfacing of a support system to an added module effectively supplementing the system with additional functional capabilities. The sub-problems are identified and solved individually by the following sequence of steps:
- recognizing existing applications in the basic reference device;
- checking an additional function of the supplementary module for compatibility with the existing applications;
- finding the class of commands to which the additional function is to be assigned;
- interacting with the user to acquire necessary information to the additional function;
- setting up the system for receiving and interpreting the additional function; and
- holding the setup stored in memory, and retrieving it each time that the base device and supplementary module are turned on.

Based on this principle, the technical problem is solved by a method as previously indicated and as defined in Claim 1.

The invention also relates to a device as indicated and as defined in Claim 5.

The features and advantages of the method according to this invention will be apparent from the following detailed description of an embodiment thereof, given by way of non-limitative example with reference to the accompanying drawings.

In the drawings:

### Brief Description of the Drawings

Figure 1 is a schematic flow chart for the method of interfacing a host electronic device to a module in order to expand the functional capabilities of the host device, according to the invention.
Figure 2 is a block diagram showing schematically the construction of the host electronic device and that of the expansion module.
Figure 3 schematically details the construction of a module associated with a host electronic device.
Figure 4 is a schematic flow chart for an exemplary application.
Figure 5 is a table illustrating the match of a command instruction to a corresponding action of a given application, as is made possible, by the module shown in Figure 3.

### Detailed Description

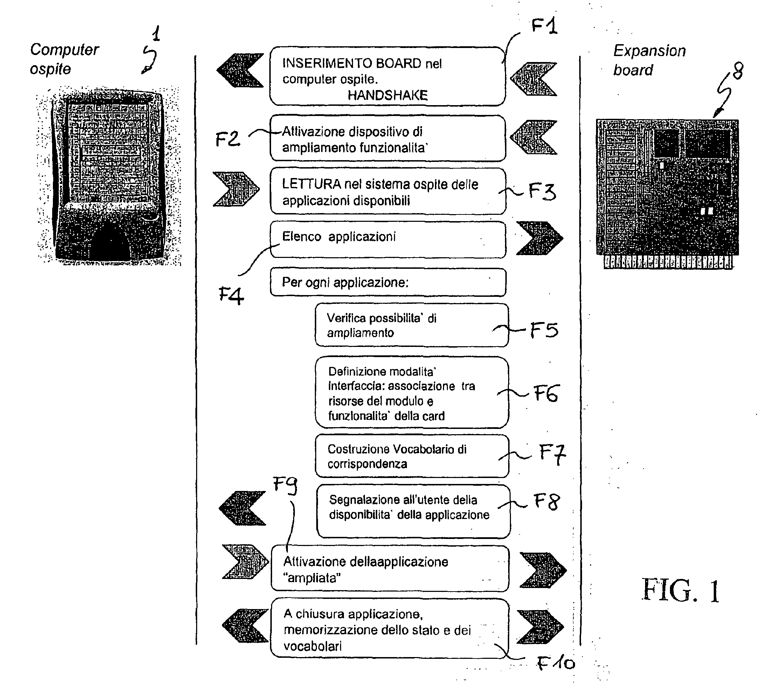

With reference to the drawings, in particular to the example shown in Figure 1, a portable, e.g. palm-top, type of host electronic device operated in accordance with the inventive method is shown generally at 1 in schematic form.

The device 1 may be a wrist organizer, a cellular phone, or a palm-top computer, such as the "Visor" model by Handspring, in which the OS operating system is installed.

Advantageously, the device 1 includes a microprocessor 2 and a memory unit 3. These internal components are interconnected by an internal bus 4, which also connects in a user's interface 5.

The device 1 further includes a connector 6 adapted for quick engagement with a mating connector 7 on a separate module 8.

The module 8 is essentially an expansion board adapted to expand the functions of the device 1, and adapted for releasable connection to the device 1 by plugging the connectors 6 and 7 together.

The module 8 includes at least a microcontroller 9 and a memory 10.

Ambient interface sensors 11 are also provided. Components 9, 10 and 11 are interconnected by an internal bus of the module 8, which bus may be provided by printed circuit tracks of the expansion board.

To explain the various aspects of this invention, the device 1 will be assumed to be a generic palm-top computer, and the expansion board to be a module adapting the device 1 for vocal command acceptation.

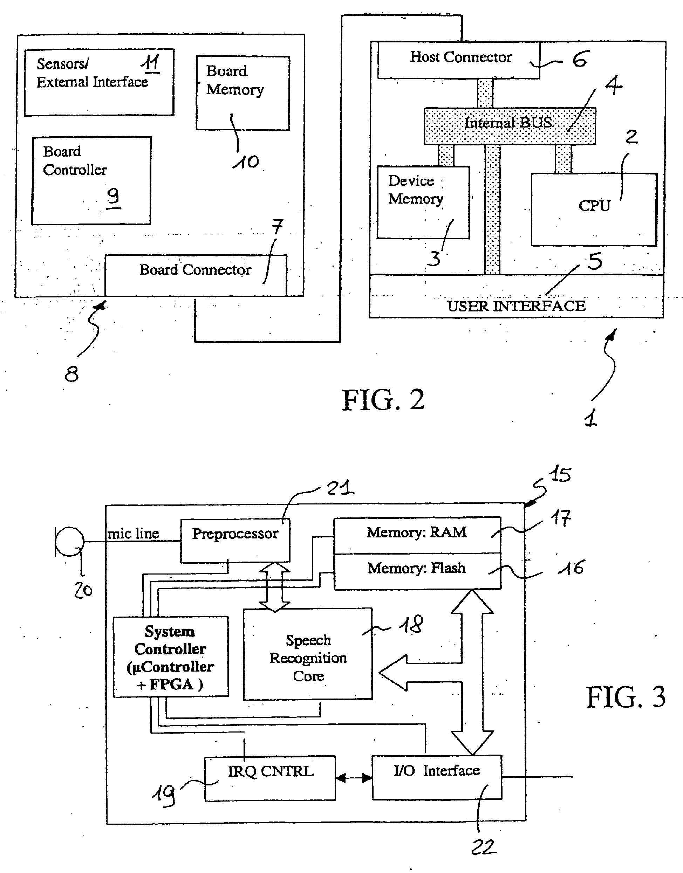

With these assumptions, and according to the flow chart of Figure 2, the vocal command function is activated by just inserting the specially provided board into the expansion slot. This board is able to independently discriminate those applications which match its functional capabilities, to set up the system for acceptance of vocal commands and control the palm-top computer applications consistently with the vocal commands imparted, without the user being required to do any setting up.

Also, the configuration and current state can be held in store for prompter system setting up upon the board being inserted on any later occasions.

By removing the above board and inserting another providing different functions, e.g. feature recognition, the palm-top computer is reconfigured in conformity the newly inserted board.

To embody the method of this invention, the inventive device should meet the following requirements:
1. include at least one expansion module 8 serving a function of choice, complete with anything the functional expansion may require (power supply, sensors, etc.), which module can be connected to a generic portable host device 1 through an interface 6, 7 having a definite protocol; the module 8 being effective to expand the functions and potential of the device 1;
2. the device 1 and module 8 should form an interconnected whole adapted, through its software and hardware components, to:
   - acquire external prompts to perform its functions;
   - convert said prompts, and respond to said prompts by activating - operations; later send consistent signals according to protocols that are compatible with the computational system of the host devices 1;
   - self-activate, and install the software upon plugging into, and remove the software upon unplugging from, the host device 1:
      - be independent of the existing applications; and
      - be independent of the existing hardware; the module 8 and the host device 1 being connected physically together only by way of their physical interfaces 6, 7.

In the case of the previous example, a system comprising a vocal command module connected to a palm-top computer should go through the following steps:
- acquiring audio sequences that contain voice messages; and
- upon recognizing a voice message, issuing the host device one or more codes of the communication protocol established between the two devices, according to the vocal command imparted.

The method of this invention comprises a sequence of steps, listed herein below in terms of interface protocol between the host device 1 and the expansion module 8. In these steps of the method:
- the functional expansion module and the host device recognize each other, at every installation;
- upon installing the module in the host device for the first time, the following is carried out automatically:
   - listing the applications that are resident in the host device;
   - checking for applicability of the expansion to each application (e.g., an administrative type of program would require no audio expansion);
   - searching out, for each application, the modes that must be used to implement the expansion (e.g., listing commands that can be extended, or implementing fresh resources), and possible user interfaces; this step may be carried out on calling an application for the first time;
   - searching out or constructing a "vocabulary" of correspondence between the minimum of functions afforded by the expansion device and the minimum of functions demanded by the application in the host device;
- the user is allowed to activate the available expansion;
- when a selection is provided, for a given application:
   - finding out the components of the "vocabulary of functions" from the sets associated with the other applications involved in the extension that is made possible by the supplementary module;
   - optionally requesting for training, or for a check in the vocabulary entered;
   - warning the user of the expansion being available, using a video or audio signal whatever;
   - activating the expansion on request by the user;
- the following is stored up:
   - the configuration;
   - the "vocabularies of functions" for each application;
   - the current state of each activated application.

Each step of the method according to the invention will now be described in detail, assuming a starting state in which the expansion module 8 is plugged into or quick connected to the host device 1 so as to form a whole.

The plugging in action, Step F1 in Figure 1, activates an "activate" procedure in the operating system of the host device 1, by reading a (high/low) logic signal from predetermined pins of the connected module. This logic signal will activate a portion of the operating system to check for the presence of any programs and/or applications in a preset memory space reserved for expansion boards.

For example, in the Handspring Visor palm-top computer, using the Palm OS operating system, there are two signals to indicated connection of an expansion board and perform two functions:
(A) entering an interrupt to the palm-top computer to warn the CPU of the connection made;
(B) activating the power supply to the board for its operation.

At the same time as the application is activated by the operating system of the host device (Step F2), the components inside the expansion module are also activated, and are now ready to implement the application.

In the context of the above example, the operating system will, upon insertion of the module or the board, search out an application having given characteristics in the memory space reserved for the board (Step F3). If such an application does exist, the current execution is interrupted and the board application is executed instead. The application would contain the necessary procedures to activate the board components and set them for use by the palm-top computer.

The presently active application will either start reading from the memory space in the host computer, or will request from the host operating system a list of the applications that are resident in the host device 1, as specified under Step F4 in Figure 1.

A list of the resources associated with each available application can thus be obtained (graphic objects such as forms, buttons, etc.), and the items of information that the expanded application can utilize be derived. Steps F5 and F6 are exemplary of operations directed to verify the functional expansion mode and define the mode of interfacing the module 8 to the device 1.

For example, when a form is identified which carries a heed message ("Wish to confirm the operation?"), and a possible confirmation ("OK"), a voice synthesizing system acquires the information provided by the contents of the message, and a vocal command system acquires the information about the confirmation to be given.

These items of information will be entered in a table; herein referred to as the "vocabulary" of correspondence between the resources used by the application and the operations demanded of the extension device, Step F7.

Furthermore, some software algorithms will have to be set up which would detain requests from the operating system and once again send the request for action to the extension module, or conversely detain an action by the extension module and notify the operational system of the action performed as if the latter had been executed by a "proprietory" software portion.

After checking with all the applications that are present in the system (Steps F5, F6 and F7) and creating a table of correspondence for each application whose functions can be "expanded" by the installed module, the system will be as specified here below.

In the expansion module 8:
- a load-and-connect program for loading into and connecting to the host system;
- an expansion board checking program; and
- an API (Application Programming Interface) for the board to dialog with the operating system of the host device.

In the host device:
- tables of correspondence between the applications and the commands from the installed device; and
- an operational system path for detaining the functions to be expanded.

A message or a light indication on the board, or alternatively a symbol appended to the application symbol on the main page, will inform the user of that the extension is available, Step F8.

Once a program affected by the expansion is activated, the module 8 connected to the portable device 1 is activated to make it ready to perform the functions requested, Step F9.

On completion of the application, or upon the board or the module being removed, certain operations will be performed to save the current state of the system, so that it can be restored immediately upon the board being inserted back in and the information about the vocabularies of correspondence can be saved, Step F10.

The modes of connecting and operating a speech recognition module will now be discussed, by way of example only, which module would be associated with a Handspring Visor model of palm-top computer in which a Palm OS™ operating system is installed, and which can accommodate additional-function boards by means of a mechanical/electrical connection (springboard expansion slot) that is physically identical with a PCMCIA connection and locates on the backside of the device.

The following are among the signals that best characterize this connection:
CD1, CD2 - Module Detects: these are connection detectors indicating to the palm-top computer that a board has been inserted into the expansion slot;
CS0, CS1 - Chip Selects: these control access to the two addressable regions that the expansion board can use; and
IRQ - Interrupt Request: a signal that issues from the board when services are requested of the palm-top computer.

Available for use with the expansion module is an API (Application Programming Interface) that enables operation on the host operating system of the subject computer. This API is effective to manage the board installation, activation of any resident applications, and events originated by the board.

Assume, moreover, a voice recognition board 15 that can run all the recognition steps by itself and is provided with compatible connection with the above palm-top computer.

This board would include at least the following components shown schematically in Figure 3:
- a non-volatile memory 16, preferably a flash type, containing the board set-up programs and the necessary APIs for dialog with the host computer; stored in a database are voice features and optional tables of correspondence for the principal applications;
- a volatile working memory 17, preferably a RAM type;
- a speech recognition core unit 18;
- an interrupt control block 19;
- a data acquisition means, particularly a microphone line 20 and associated pre-processor 21; and
- I/O interfacing devices (USB, 12C).

Stored up in the resident memory 16 of the board 15 are all the voice recognition activating procedures, which will be activated and made available upon inserting the board 15 into the expansion slot. The following will be specifically required:
- an FPGA loading and activating procedure, in order to set up the connections and protocols between the computer and the board;
- a voice recognition system activating procedure to set up the system, by placing it in a standby state, and activate it as requested;
- an interrupt managing procedure by reading the tables of correspondence between the voice commands and the software actions, and activating these actions; and
- a control procedure effective to manage the above software components and guide their activation through the various steps.

Consider the Palm OS™ operating system that is resident in the palm-top computer: this operating system is host to several applications. Using suitable software modules, its characteristics related to the user interface can be extracted for each application held in the computer. These characteristics can be represented by their associated resource modules. Resources means here those software portions that are preset by the operating system and interact with the user through the input/ output units.

Given below is an example of applicational resources:

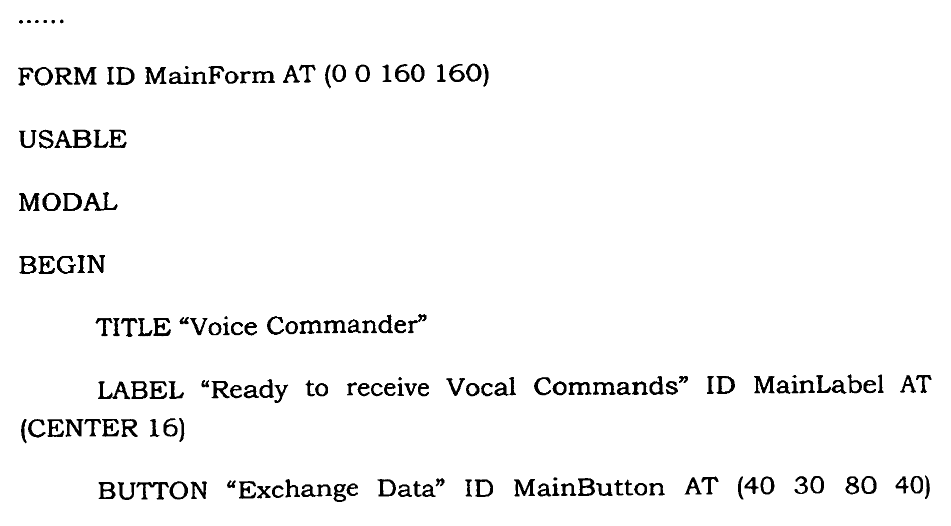

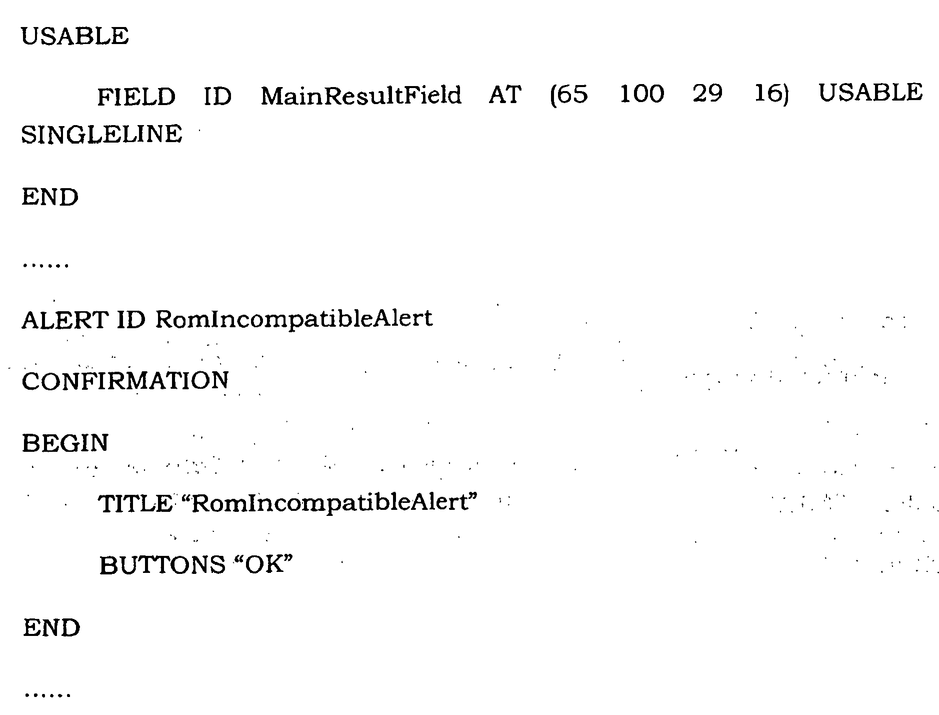

Using a suitable instruction sequence, the above resources are detained by the program that is to set the table of correspondence for the voice recognizer; those resources that can be supplied a corresponding vocal command (in the above example, these are the resources designated BUTTONS, in other cases, these may be elements in a list) are then identified. According to resource type, a patch of needed software functions to emulate the resource is constructed, and an item in the table of specific correspondence of the current application is created which would encompass the construction of each resource.

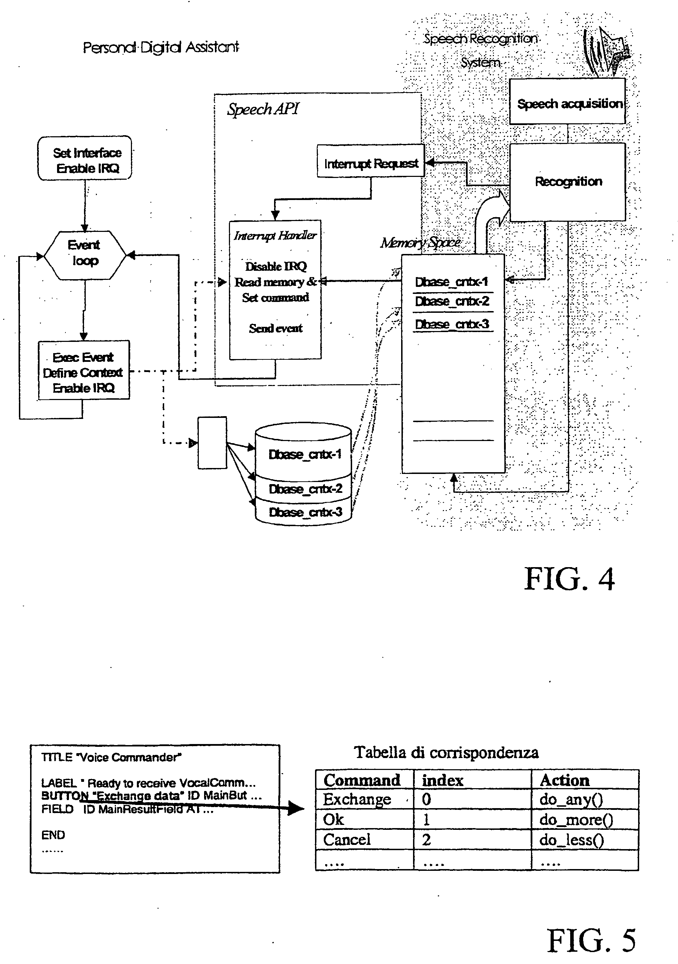

Figure 5 illustrates this kind of match in table form.

Upon inserting the board, the following actions take place in the expansion slot of the palm-top computer:
1. once the module detect signals (CD1, CD2) that attest of the insertion are detained, the Palm OS™ operating system searches the first block (identified by signal CSO) for availability of a memory space that is reserved for the expansion board, and searches for the presence of any applications;
2. after finding out an application concerning the word recognizer setup, the operating system copies that application into the internal memory, and executes its contents;
3. a search is also started among the resident applications to find out those having a table of correspondence already available; according to the configuration of given parameters effected by the user, the system is now able to scan the other applications to make them available for guiding by vocal commands, initializing fresh tables of correspondence;
4. to activate an application, the system generates an activation request to the expansion module, supplying pertinent data; the module will set up to receive a vocal command;
5. if the command is recognized, the module returns to the system the index (in the table of correspondence) of the word that has been recognized; the detention algorithm will then produce commands as appropriate to the context of the current application; and
6. if another application is called, the databases associated with the preceding application are closed, with the state of the preceding application being optionally saved, and the procedure is resumed from Step 4 above.

In the instance of a module that is designed to expand the functions of a basic electronic device in terms of vocal command acquisition, a range of possible sceneries for the implementation of an interface between the module and the device are discussed here below by way of examples only.

Assume a module that is attached to a generic portable device and contains a series of standard applications not to be modified by the user.

Assume, moreover, a group of modifiable applications, i.e. suitable applications for expansion, e.g. using a software interface that comprises:
- the acquisition of a database of necessary commands to the expansion;
- a connection channel to the device; and
- an acquisition system.

Let us now review a number of terms useful to make the invention aspects more clearly understood, as they appear in this exemplary application.

"Context", in the portable device environment, encompasses what the user is able to perceive, such as display icons, LEDs, or other signals, and the group of commands that are available at the time, whether vocal commands or commands of a different nature, together with a respective group of feasible actions.

"Microcontext" means a state of the application present in the context, within which only some of the actions in the group provided are feasible.

"Feedback" means executing a command; for example, in the event of the message being rejected or not recognized by the device (as well as of a message being returned which is not included in the dbase or is inconsistent with the current microcontext), no actions would be executed.

"Grammar" means the body of commands available for the applications. An active grammar is a sub-set of necessary commands in a given context, and comprises a group of general (uncontextual) commands and a group of specific commands for a given application.

These groups of commands are contained in a database, as explained herein below under the heading Scenery 1.

### Scenery 1: Guided acquisition of databases to the voice recognizer

- An uncontextual database exists that includes the commands shared by all the applications.
   Example:
   *[ok, new, details, cancel, delete, note, graffiti, next, back, show, priority, exit, etc.]*
- Some databases exist that are shared by some applications.
   Example:
   numerical: (calc, calendar, clock, etc.)
      *[0,1,2,...,10,11,12]*
      edit:
      *[undo, cut, copy, paste, select, keyboard]*
- When the principal applications are taken into account, there may be approximately ten contexts, each having a group of at least twenty vocal commands.
- Database acquisition flow

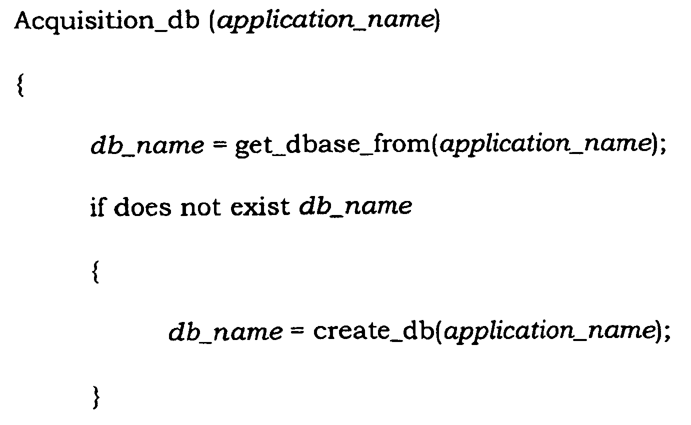

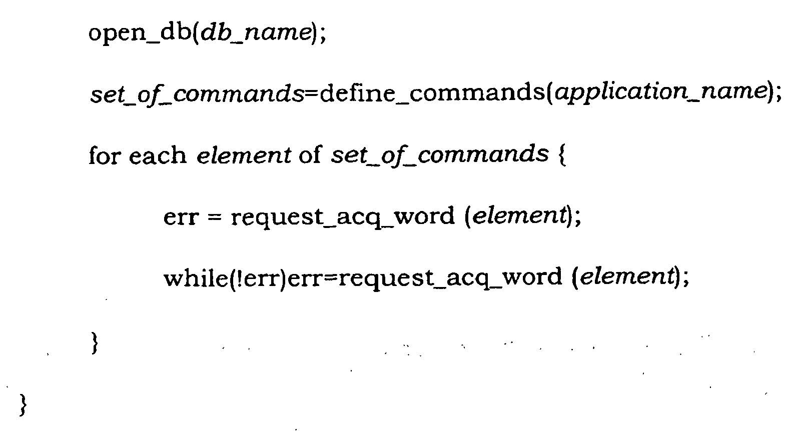

### Scenery 2: Adaptation to the speaker

- Consider a pre-existing database
- It is possible to activate or de-activate an on-line acquisition mode
- With a command issued, the following situations appear:
   - recognition occurs
   - the last command is stored
   - another command is received and recognized
   - if the on-line acquisition mode is active and the last command is confirming the preceding one (e.g., is neither a cancel nor an exit command), then the stored command is acquired to the database.

### Scenery 3: Production of a database for a context, optionally by extracting data from different contexts

This is a method of interfacing to the software application that may or may not employ voice recognition, and in which:
- on first installation of the application, the interfacing mode required by the application, and the "vocabulary of commands" that goes with it, are declared automatically;
- the user is enabled to select the interfacing mode;
- if the vocal command is selected, then
   - the components of the "vocabulary of commands" in the set of vocal commands that pertain to the other voice-activatable applications are located;
   - a request is optionally passed for training in the vocabulary entered;

Vocabulary of commands: this is a database that is tied to an application (e.g., by a consistent name) and contains a set of commands that are specific to that application and already exist or are generated by a vocal command acquiring step.

Integration to the database construction can be obtained (on first installation) by deriving, from the other existing databases, the individual commands of the same type and performing an off-line acquisition. For the rest of them, the user would be requested a normal acquisition (see Scenery 1).

The voice messages that correspond to the requested commands may be de-correlated from a linguistic standpoint, unless they lose their semantic significance by the user. For example, if the user chooses to interpret the commands by a different language from that of the device system, he/she can do so on condition that consistency be maintained between the voice message and the requested command. E.g.:
requested command: "OK" → spoken: *"va bene"*
requested command: "SHOW" → spoken: *"mostra"*.

In all cases, the equivocating (different words conveying the same notion), faltering pronunciation, and discriminating (words having different meanings but the same pronunciation) characteristics of speech should be taken into account in choosing the vocal commands.

### Scenery 4: A sequence collecting information about an application and the acquisition of vocal commands (connected with Scenery 3) and subsequent patch to the operating system in order to synchronize the vocal commands to the application

The system will be able to:
- display a list of applications in the palm-top computer that have no corresponding vocal command database;
- allow selecting an application from the list;
- acquire the application resources, which include *inter alia* the list of commands to be input by voice; and
- construct a training database, dependent on the application and containing the vocal command list, like in Scenery 1.

The patch program of the operating system should be able to:
- retrieve the identification of the application requested by the user;
- find the dbase that pertains to the application; and
- detain the information from the voice recognition system and produce equivalent events for queuing to the events handled by the current application.

### Scenery 5: Activation of the operating system patch upon calling a generic application

The system should be able to detain the request to activate an application, and through a program will:
- verify that the activated application can be guided by vocal commands;
- if necessary, request that a database be generated for activation by vocal commands;
- provide the recognition device with the addresses of the databases (contextual and uncontextual) linked to the application;
- activate the recognition device (place it in a standby state awaiting commands); and
- start the application.

### Database:

It contains the "vocabulary of commands" associated with a context or set of contexts. There must be a database for each context.

Univocal correspondence exists between the database, in the palm-top computer and the database associated with the same context but contained in the recognition device.

It comprises:
- a "completed" flag, indicating that the whole set of commands is acquired;
- optionally, a list of the contexts encompassed by the database;
- an on-line acquisition mode flag, indicating whether the database is enabled to on-line acquire fresh voice messages corresponding to the commands it contains;
- indications about the corresponding database in the recognition database (starting address, ending address); and
- a list of specific controls to the application considered, or the class of actions shared by different contexts, to show:
   - the name of the requested command (label);
   - the presence of the recognizer in the database; and
   - a corresponding sequence of actions (commands to be effected by the operating system in order to execute the requested command).

Figure 4 shows schematically an exemplary application flow:
Communication channels and flags
Enabling recognition:
   - verifies the state of the recognition device
   - identifies the context
   - activates the acquisition and recognition enable flag for the device
Stacked command sequences
   - store the sequence of the commands executed last, and allow tracing them
   - allow optional on-line acquisition
Recognition acknowledge flag
Data addressing
   ↑/↓ location of the contextual database
   ↑/↓ location of the uncontextual databases
   ↑/↓ address of the recognized word, or membership class
   ↑/↓ address of the range of words that belong to one class.

## Claims

1. A method of expanding the functional capabilities of portable electronic devices (1) with user friendly modes, wherein a host device (1) has a quick-connect functional expansion module (8) having an API to dialog with the Operating System of said host device,
**characterized by** the following steps:
a - at each installation of a given module (8), recognizing between the functional expansion module and the host device (1) each other;
b - on first installation of a given expansion module (8) in the host device (1), performing a series of checking operations automatically;
c - selection from the user to activate an available expansion; and
d - upon a given application is selected, storing the configuration and functions required for such a given application;
said step of performing a series of checking operations comprising at least:
- listing the applications installed in the host device (1);
- checking said expansion module (8) for compatibility with each application;
- searching out the required modes to implement the expansion of the functional capabilities of portable electronic devices (1), for each application or the first time that an application is called to work; and
- constructing a table of correspondence between the minimum of functions afforded by the expansion module (8) and the minimum of functions demanded by the application in the host device (1).

2. A method according to Claim 1, **characterized in that**, once a given application is selected, if further comprises the following steps:
- finding the components of the "vocabulary of functions" from the sets that pertain to the other applications involved in the expansion made possible by the supplementary module;
- optionally, requesting training or verifying the vocabulary entered;
- warning the user of the availability of the expansion, using any video or audio signals; and
- activating the expansion on request by the user.

3. A method according to Claim 1, **characterized in that** said storing step comprises storing:
- the configuration;
- the "vocabularies of functions" for every application; and
- the current state of each activated application.

4. A portable electronic device (1) with expanded function capability in user friendly modes, comprising a host device (1) associated to a quick-connect function-expanding module (8), **characterized in that** said quick-connect funation-expanding module (8) comprises software adapted to perform steps defined in claim 1 as:
- a host device loading and connecting program adapted to carry out step a;
- an expansion module control program adapted to carry out step b; and
- an API (Application Programming Interface) for the module to dialog with the operating system of the host device (1) and adapted to carry out steps c-d;
and **in that** said host device (1) comprises:
- tables of correspondence between the applications and the commands of the installed module; and
- an operating system patch for detaining the functions to be expanded.

## Revendications

1. Procédé d'expansion des possibilités fonctionnelles de dispositifs électroniques portables (1) avec des modes conviviaux, dans lequel un dispositif hôte (1) a un module d'expansion fonctionnel à raccordement rapide (8) ayant une interface de programmation pour dialoguer avec le système d'exploitation dudit dispositif hôte, **caractérisé par** les étapes suivantes :
a. à chaque installation d'un module donné (8), la reconnaissance entre le module d'expansion fonctionnel et le dispositif hôte (1) l'un par rapport à l'autre ;
b. sur une première installation d'un module d'expansion donné (8) dans le dispositif hôte (1), l'exécution d'une série d'opérations de vérification de façon automatique ;
c. la sélection par l'utilisateur pour activer une expansion disponible ; et
d. lorsqu'une application donnée est sélectionnée, le stockage de la configuration et des fonctions requises pour une telle application donnée ;
ladite étape d'exécution d'une série d'opérations de vérification comprenant au moins :
- le listage des applications installées dans le dispositif hôte (1) ;
- la vérification dudit module d'expansion (8) pour une compatibilité avec chaque application ;
- la recherche des modes requis pour implémenter l'expansion des possibilités fonctionnelles des dispositifs électroniques portables (1), pour chaque application ou la première fois où une application est appelée à travailler ; et
- la construction d'une table de correspondances entre le minimum de fonctions données par le module d'expansion (8) et le minimum de fonctions demandées par l'application dans le dispositif hôte (1).

2. Procédé selon la revendication 1, **caractérisé en ce que**, après la sélection de l'application donnée, il comprend en outre les étapes suivantes :
- la récupération des composants du « vocabulaire de fonctions » à partir des ensembles qui concernent les autres applications impliquées dans l'expansion rendue possible par le module supplémentaire ;
- en option, le requête de formation ou de vérification du vocabulaire saisi ;
- l'avertissement de l'utilisateur de la disponibilité de l'expansion, en utilisant des signaux vidéo ou audio quelconques ; et
- l'activation de l'expansion sur requête par l'utilisateur.

3. Procédé selon la revendication 1, **caractérisé en ce que** ladite étape de stockage comprend le stockage de :
- la configuration;
- des « vocabulaires de fonctions» pour chaque application ; et
- l'état courant de chaque application activée.

4. Dispositif électronique portable (1) avec une possibilité de fonction expansée dans des modes conviviaux, comprenant un dispositif hôte (1) associé à un module d'expansion fonctionnel à raccordement rapide (8), **caractérisé en ce que** ledit module d'expansion fonctionnel à raccordement rapide (8) comprend des logiciels adaptés pour exécuter les étapes définies dans la revendication 1 comme :
- un programme de chargement et de connexion du dispositif hôte adapté pour effectuer l'étape a ;
- un programme de commande du module d'expansion adapté pour effectuer l'étape b ; et
- une interface de programmation pour le module afin de dialoguer avec le système d'exploitation du dispositif hôte (1) et adapté pour effectuer les étapes c etd;
et **en ce que** ledit dispositif hôte (1) comprend :
- des tables de correspondance entre les applications et les commandes du module installé ; et
- un patch du système d'exploitation pour détenir les fonctions à agrandir.

## Patentansprüche

1. Verfahren zum Erweitern der Funktionsfähigkeiten von tragbaren, elektronischen Vorrichtungen (1) mit nutzerfreundlichen Modi, worin eine Host-Vorrichtung (1) einen Schnellverbindungsfunktionserweiterungsmodul (8) hat, der eine API für den Dialog mit dem Betriebssystem der Host-Vorrichtung hat, **gekennzeichnet durch** die folgenden Schritte:
a - gegenseitiges Erkennen zwischen dem Funktionserweiterungsmodul und der Host-Vorrichtung (1) bei jeder Installation eines gegebenen Moduls (8);
b - automatisches Durchführen einer Serie von Prüfoperationen bei der ersten Installation eines gegebenen Erweiterungsmoduls (8) in der Host-Vorrichtung (1);
c - Auswahl von dem Nutzer, um eine verfügbare Erweiterung zu aktivieren; und
d - auf das Auswählen einer gegebenen Anwendung hin, Speichern der Konfiguration und der Funktionen, die für diese gegebene Anwendung erforderlich sind;
wobei der Schritt des Durchführens einer Serie von Prüfoperationen mindestens aufweist:
- Auflisten der Anwendungen, die in der Host-Vorrichtung (1) installiert sind;
- Prüfen des Erweiterungsmoduls (8) auf Kompabilität mit jeder Anwendung;
- Ausfindigmachen der erforderlichen Modi, um die Erweiterung der Funktionseigenschaften der tragbaren, elektronischen Vorrichtungen (1) zu implementieren, für jede Anwendung oder für das erste Mal, dass eine Anwendung zum Arbeiten aufgerufen wird; und
- Aufbauen einer Korrespondenztabelle zwischen dem Minimum von Funktionen, die **durch** den Erweiterungsmodul (8) geleistet werden, und dem Minimum von Funktionen, die von der Anwendung in der Host-Vorrichtung (1) gefordert werden.

2. Verfahren nach Anspruch 1, **dadurch gekennzeichnet, dass**, sobald eine gegebene Anwendung ausgewählt wird, es weiterhin die folgenden Schritte aufweist:
- Auffinden der Komponenten des "Funktionsverzeichnisses" aus den Sätzen, die zu den anderen Anwendungen gehören, die an der Erweiterung beteiligt sind, die durch den zusätzlichen Modul ermöglicht wird;
- optionales Anfordern eines Trainings oder Verifizierens des eingegebenen Verzeichnisses;
- Warnen des Nützers über die Verfügbarkeit der Erweiterung unter Verwendung eines Video- oder Audiosignals; und
- Aktivieren der Erweiterung auf Anforderung durch den Nutzer.

3. Verfahren nach Anspruch 1, **dadurch gekennzeichnet, dass** der Speicherschritt aufweist das Speichern:
- der Konfiguration;
- der "Funktionsverzeichnisse" für jede Anwendung; und
- des gegenwärtigen Zustands jeder aktivierten Anwendung.

4. Tragbare, elektronische Vorrichtung (1) mit erweiterter Funktionsfähigkeit in nutzerfreundlichen Modi, die eine Host-Vorrichtung (1) aufweist, die mit einem Schnellverbindungsfunktionserweiterungsmodul (8) verbunden ist,
**dadurch gekennzeichnet, dass** der Schnellverbindungsfunktionserweiterungsmodul (8) Software aufweist, die dafür ausgelegt ist, Schritte, die in Anspruch 1 definiert sind,
durchzuführen, wie:
- ein Host-Vorrichtung-Lade-und-Verbindungsprogramm, das ausgelegt ist, den Schritt a auszuführen;
- ein Erweiterungsmodulsteuerprogramm, das ausgelegt ist, den Schritt b auszuführen; und
- eine API (Anwendungsprogrammschnittstelle) für den Modul, die mit dem Betriebssystem der Host-Vorrichtung (1) einen Dialog ausführt und die ausgelegt ist, die Schritte c - d auszuführen;
und dass die Host-Vorrichtung (1) aufweist:
- Korrespondenztabellen zwischen den Anwendungen und den Befehlen des installierten Moduls; und
- eine Betriebssystemkorrektur zum Festhalten bzw. Aufhalten der Funktionen, die erweitert werden sollen.
